# DEMANDE DE BREVET EUROPEEN

(11) **EP 4 487 692 A1**
(43) Date de publication de la demande: **08.01.2025**
(21) Numéro de dépôt: 23306120.9
(22) Date de dépôt: 03.07.2023
(51) Int. Cl.: A23G 3/20, A23G 3/22, A23P 20/12, A23P 20/15

(54) **DISPOSITIF DE RECUPERATION DU SURPLUS DE PRODUITS DE NAPPAGE**

(71) Demandeur: Dantes, Vincent, 67370 Willgottheim (FR)
(72) Inventeur: DANTES, Merlin, 67370 WILLGOTTHEIM (FR)
(74) Mandataire: Kessler, Marc

(57) **Abrégé**

La présente invention se rapporte à un dispositif (1) de récupération d'un ou plusieurs agents de nappage, comprenant une rampe (2) inclinée, qui comprend une paroi de fond (4), comprenant une extrémité (4a) amont et une extrémité (4b) avale, une première paroi latérale (5) et une seconde paroi latérale (6) qui s'étendent de part et d'autre, sensiblement verticalement, et le long de ladite paroi de fond (4), ledit dispositif (1) comprenant des moyens de support (3) d'un ou plusieurs moyens de collecte du ou des agents de nappage, qui sont amovibles. L'invention porte également sur un ensemble de nappage comprenant un ou plusieurs dispositifs selon l'invention.

## Description

### Objet de l'invention

La présente invention a trait au domaine du nappage d'un ou plusieurs produits, en particulier d'un ou plusieurs produits alimentaires, à l'aide d'au moins un agent de nappage, qui est, de préférence, sous forme liquide, et elle porte, en particulier, sur un dispositif de récupération du ou des agents de nappage.

### Etat de la technique

Certains produits, en particulier des produits alimentaires, peuvent être recouverts d'un ou plusieurs agents de recouvrement. Les agents de recouvrement sont dits agents de nappage lorsque les produits sont nappés, à savoir partiellement recouvert de l'agent de recouvrement, au moins une surface du produit généralement ne se trouvant pas ou peu recouverte, ou sont dits agents d'enrobage lors que les produits sont enrobés, à savoir totalement recouverts de l'agent de recouvrement, généralement sur toutes leurs surfaces.

Les agents de recouvrement peuvent être un ou plusieurs solides, par exemple des particules, des granules ou des poudres, ou bien encore une ou plusieurs pâtes, gels, liquides ou semi-liquides. Dans le domaine particulier de la pâtisserie, ce sont généralement des produits alimentaires, tels que par exemple de la farine, des céréales, de la panure, ou bien des sirops ou du chocolat liquide par exemple, qui, habituellement, se gélifient ou respectivement se durcit lors de leur refroidissement.

L'enrobage des produits alimentaires se fait généralement par immersion dans un récipient contenant l'agent d'enrobage, alors que le nappage se fait à l'aide d'une pluie, d'un rideau ou d'une nappe, d'agent de nappage, s'écoulant sur les produits à recouvrir, ces derniers étant disposés sur une grille ou sur une bande transporteuse, le surplus de l'agent de nappage étant recueilli à l'aide de moyens de récupération comprenant, ou étant, un récipient, généralement un bac.

Par exemple, le document US6367409 décrit un ensemble d'enrobage d'aliments comprenant un récipient, destiné à recevoir un agent d'enrobage, et dans lequel un tamis, destiné à recevoir les produits à enrober, peut prendre place, le récipient d'enrobage étant alors également le récipient de récupération du surplus de l'agent d'enrobage.

Le document CN114391664 décrit un ensemble de nappage de fèves avec de la poudre et du sucre, comprenant une enceinte de nappage qui comprend une grille de réception des produits à napper, une bouche de pulvérisation de l'agent de nappage, disposée au-dessus de la grille, et une chambre de réception du surplus de l'agent de nappage, disposée sous la grille, cette chambre de réception ayant la forme d'un entonnoir.

### Buts de l'invention

La présente invention vise à fournir un dispositif de récupération d'un ou plusieurs agents de nappage et un ensemble de nappage de produits, qui ne présentent pas les inconvénients de l'état de la technique.

La présente invention vise à fournir une alternative aux solutions de l'état de la technique existantes.

La présente invention vise à fournir un dispositif de récupération d'un ou plusieurs agents de nappage présentant un écoulement ou une vidange optimisé(e) du ou des agents de nappage.

La présente invention vise à fournir un dispositif de récupération d'un ou plusieurs agents de nappage adapté à la réalisation d'un nappage manuel ou semi-automatique, facile à mettre en oeuvre, transportable, d'un encombrement réduit.

### Résumé de l'invention

La présente invention porte sur un dispositif de récupération d'un ou plusieurs agents de nappage, comprenant une rampe inclinée, qui comprend une paroi de fond comprenant une extrémité amont et une extrémité avale, une première paroi latérale et une seconde paroi latérale qui s'étendent de part et d'autre, sensiblement verticalement, et le long de ladite paroi de fond, caractérisé en ce que ledit dispositif comprend des moyens de support d'un ou plusieurs moyens de collecte du ou des agents de nappage, qui sont amovibles.

Selon des modes particuliers de l'invention, le dispositif selon l'invention comprend au moins une, ou une combinaison quelconque appropriée, des caractéristiques suivantes :
- les moyens de support d'un ou plusieurs moyens de collecte du ou des agents de nappage sont mobiles,
- les moyens de support sont disposés par rapport à la rampe de manière à ce que le ou les moyens de collecte du ou des agents de nappage soient à l'aplomb de l'extrémité avale de la paroi de fond de la rampe,
- les moyens de support (3) ont une section longitudinale, dans le plan Y-Z, qui est sensiblement en forme de « L »,
- les moyens de support comprennent deux bras comprenant chacun une extrémité supérieure, comprenant ou coopérant avec des moyens de fixation réversibles à la rampe, et une extrémité inférieure bordant une assise pour recevoir le ou les moyens de collecte du ou des agents de nappage,
- la paroi de fond, la première paroi latérale et la seconde paroi latérale sont thermostatées,
- le dispositif comprend en outre des moyens de piètement, pourvus au niveau de l'extrémité amont de la paroi de fond,
- la première paroi latérale et la seconde paroi latérale sont inclinées vers l'extérieur de la rampe,
- la première paroi latérale et la seconde paroi latérale comprennent chacune une portion inférieure, et au moins une portion supérieure, les portions inférieures ayant une inclinaison différente de celle desdites portions supérieures,
- la première paroi latérale et la seconde paroi latérale comprennent un rebord, formé par un replis de l'extrémité des parois,
- l'extrémité amont de la paroi de fond présente une largeur, selon l'axe X-X', plus grande que celle, selon l'axe X-X', de l'extrémité avale,
- le dispositif comprend en outre des moyens de piètement pourvus au niveau de l'extrémité amont de la paroi de fond.

La présente invention porte également sur l'utilisation du dispositif selon l'invention, pour la récupération d'un ou plusieurs agents de nappage.

La présente invention porte, en outre, sur un ensemble de nappage comprenant un ou plusieurs dispositifs selon l'invention, des moyens de réception du ou des produits à napper, des moyens de distribution du ou des agents de nappage, et un ou plusieurs moyens de collecte du ou des agents de nappage.

La présente invention porte également sur l'utilisation de l'ensemble de nappage selon l'invention pour napper un ou plusieurs produits alimentaires à l'aide d'un ou plusieurs agents de nappage étant solides, liquides ou semi-liquides.

### Brève description des figures

La figure 1 est une représentation schématique d'une vue en perspective d'une vue de côté d'un mode de réalisation particulier du dispositif de récupération de l'agent de nappage selon l'invention.
La figure 2 est la même représentation schématique que la figure 1.
La figure 3 est une représentation schématique d'une vue en perspective, d'une vue de dessus et en arrière, du mode de réalisation particulier du dispositif de récupération de l'agent de nappage selon l'invention représenté à la figure 1.
La figure 4 est une autre représentation schématique d'une vue en perspective d'une vue de côté d'un élément constitutif du mode de réalisation du dispositif de récupération de l'agent de nappage selon l'invention représenté à la figure 1.

### Description détaillée de l'invention

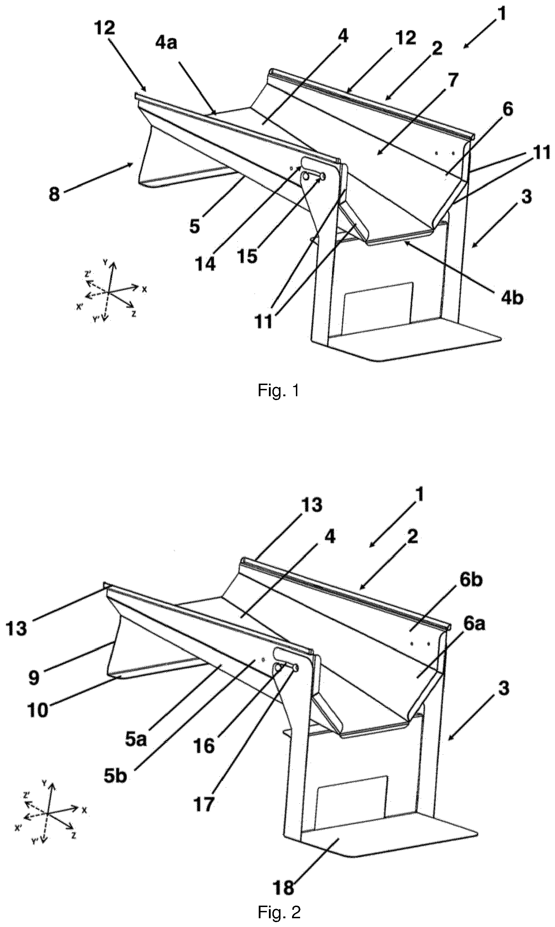

Dans le cadre de la présente description, les termes « nappage » et « napper » signifient le recouvrement partiel d'un produit par un matériau, ce dernier adhérant au premier, en opposition aux termes « enrobage » et « enrober » qui signifient le recouvrement total du produit par le matériau. Les termes , « haut » et « bas », « sur » et « sous », « au-dessus » et « en dessous », « vertical » et « verticalement » font référence à la position normale des éléments qui forment le dispositif selon l'invention, et en particulier à leur position et agencement, tels que représentés aux figures 1 à 4, et tels que définis par le référentiel XYZ arbitraire représenté sur les figures.

Le dispositif 1 de récupération d'au moins un agent de nappage selon l'invention est décrit, à titre d'exemple non limitatif, pour la récupération du surplus d'un ou plusieurs agents de nappage, s'écoulant d'un ou plusieurs produits alimentaires, lors de leur nappage à l'aide d'un ou plusieurs agents de nappage liquides ou semi-liquides ; néanmoins, il peut également être mis en oeuvre lors du nappage de produits qui ne sont pas alimentaires et/ou il peut être mis en oeuvre avec un ou plusieurs agents de nappage qui ne sont pas des liquides ou des semi-liquides, comme par exemple des solides, en particulier sous la forme de particules, de granules ou de la poudre, y compris des particules en suspension dans un liquide.

Le dispositif 1 de récupération du ou des agents de nappage selon l'invention comprend une rampe 2, apte à recevoir, et en fonctionnement recevant, le surplus du ou des agents de nappage provenant de moyens de distribution du ou des agents de nappage, et des moyens de support 3 d'au moins un moyen de collecte du ou des agents de nappage.

La rampe 2 comprend une paroi de fond 4, comprenant une première extrémité 4a et une seconde extrémité 4b, une première paroi latérale 5 et une seconde paroi latérale 6, les parois latérales 5 et 6 s'étendant de part et d'autre, sensiblement verticalement et le long de la paroi de fond 4 selon l'axe Z-Z'. La paroi de fond 4 et les parois latérales 5 et 6 forment un espace intérieur 7 de réception du surplus du ou des agents de nappage.

La première extrémité 4a de la paroi de fond 4 est dite « amont », car elle se situe au-dessus de la seconde extrémité 4b, qui est dite « avale », car se situant plus bas que la première extrémité 4a, ce qui permet à la paroi de fond 4, et donc à la rampe 2, d'être inclinées, favorisant ainsi l'écoulement du surplus du ou des agents de nappage reçus sur la rampe 2, vers l'extrémité 4b avale, qui, en fonctionnement, débouche sur le moyen de collecte du surplus du ou des agents de nappage.

L'inclinaison de la rampe 2, et donc de la paroi de fond 4, est obtenue par l'emploi de la première et de la seconde parois latérales 5, 6 ayant des hauteurs différentes entre l'extrémité 4a amont et de l'extrémité 4b aval, et le long de la paroi de fond 4, ou par l'emploi de moyens de piètement 8, pourvus à la première extrémité 4a de la paroi de fond 4, permettant au dispositif 1 selon l'invention de reposer sur un support ou plan de travail. Avantageusement, cette inclinaison est obtenue par la combinaison, à la fois, de la différence de hauteurs des parois latérales 5, 6 le long de la paroi de fond 4 et par la présence des moyens de piètement 8, ce qui procure à la paroi de fond 4, et donc à la rampe 2, une inclinaison plus importante tout en ayant un dispositif 1 de récupération selon l'invention qui est compact.

Les moyens de piètement 8 peuvent être pourvus sous tout ou partie de la rampe 2. De préférence, ils sont pourvus au niveau d'une ou des deux extrémités 4a et/ou 4b de la paroi de fond 4. S'ils sont présents aux deux extrémités 4a et 4b, les moyens de piètement 8 à l'extrémité 4b avale ont une hauteur inférieure à celle de ceux pourvus à l'extrémité 4a amont, ce qui participe à l'inclinaison de la rampe 2.

Dans un mode de réalisation particulier de l'invention, seule l'extrémité 4a amont de la paroi de fond 4 coopère, ou comprend, les moyens de piètement 8, ce qui présente l'avantage d'accentuer l'inclinaison de la rampe 2.

Les moyens de piètement 8 coopèrent, comprennent ou sont, un ou plusieurs pieds 9, qui, de préférence, est, ou sont, d'une hauteur ajustable, avantageusement les uns indépendamment des autres pour les modes de réalisation qui comprennent plusieurs pieds 9. Avantageusement, le ou les pieds 9 sont télescopiques, et comprennent des moyens de réglages et/ou des moyens pour le maintien d'une hauteur déterminée.

Dans le mode de réalisation du dispositif 1 selon l'invention représenté aux figures 1 à 3, les moyens de piètement 8 comprennent un pied 9 comprenant une paroi, ou formé d'une paroi, de préférence pleine, s'étendant le long de l'extrémité 4a amont de la paroi de fond 4, selon l'axe X-X', et s'étendant également selon l'axe Y-Y', vers le bas de la rampe 2 et l'extérieur de l'espace espace intérieur 7 de la rampe 2, et forme un angle aigu avec le plan formé par la paroi de fond 4, avantageusement un angle droit. De préférence cet angle peut être ajustable et modifiable, ce qui permet à la rampe 2 et donc au dispositif 1 selon l'invention de s'adapter au support ou plan de travail qui le recevra.

De préférence, le pied 9, comprenant ou formé d'une paroi, comprend un rebord 10, formant un angle aigu avec la paroi formant le pied 9, avantageusement ajustable et modifiable, et qui s'étend, de préférence, selon l'axe Z-Z', dans un plan parallèle à celui formé par le support ou plan de travail sur lequel le dispositif 1 selon l'invention peut prendre place, en direction de l'extrémité 4b avale de la paroi de fond 4. Cela présente l'avantage de procurer à la rampe 2, et donc au dispositif 1 selon l'invention, une stabilité accrue.

Dans un mode de réalisation particulier, l'extrémité 4a amont de la paroi de fond 4 peut avoir une largeur, selon l'axe X-X', plus grande que celle de l'extrémité 4b avale, selon l'axe X-X', ce qui permet d'accélérer l'écoulement du ou des agents de nappage et ainsi de minimiser les pertes d'agents de nappage récupérés.

La première paroi latérale 5 et la seconde paroi latérale 6 peuvent être l'une et/ou l'autre des parois droites, s'étendant sensiblement horizontalement, selon l'axe Y-Y'. La rampe 2 adopte alors une section transversale, dans le plan X-Y, en forme de « U ».

De préférence, la première paroi latérale 5 et/ou la seconde paroi latérale 6 sont inclinées, s'étendant depuis la paroi de fond 4 vers l'extérieur de la rampe 2, vers l'extérieur de l'espace intérieur 7, ce qui présent l'avantage d'améliorer la récupération du surplus du ou des agents de nappage.

De préférence, la première paroi latérale 5 et/ou la seconde paroi latérale 6 comprennent une portion inférieure 5a et au moins une portion supérieure 5b, respectivement une portion inférieure 6a et au moins une portion supérieure 6b, qui ne présentent pas la même inclinaison entre elles, la portion inférieure 5a, respectivement 6a, étant, de préférence, plus inclinée que la portion supérieure 5b, respectivement 6b, la ou les portions supérieures 5b et/ou 6b formant un angle obtus avec leur portion inférieure 5a ou 6a respective, cette dernière ou ces dernières s'étendant avantageusement sensiblement verticalement, selon l'axe Y-Y'.

L'inclinaison de la portion inférieure 5a de la première paroi latérale 5 peut être identique ou similaire à, ou bien différente de, celle de la portion inférieure 6a de la seconde paroi latérale 6, et/ou l'inclinaison de la portion supérieure 5b de la première paroi latérale 5 peut être identique ou similaire, ou bien différente, de celle de la portion supérieure 6b de de la seconde paroi latérale 6. De préférence, la seconde paroi latérale 6 et symétrique, ou sensiblement symétrique, à la première paroi latérale 5 selon un plan de symétrie qui est parallèle au plan Y-Z (cf. figures 1 et 2).

De préférence, la première paroi latérale 5 et/ou la seconde paroi latérale 6, et/ou leur portion inférieure 5a et 6a et/ou leur une portion supérieure 5b, 6b comprennent, ou forment, chacune et chacun, au niveau de l'extrémité 4b avale de la paroi de fond 4, un rebord 11, formé par un replis de l'extrémité de chaque paroi latérale 5 et 6 et/ou de leur portion 5a, 5b, 6a, 6b, ce qui présente l'avantage de guider le ou les agents de nappage, qui seraient sur la ou les parois latérales 5 et 6, afin qu'ils s'écoulent plus facilement vers la dite extrémité 4b avale, et permettre ainsi de maximiser la récupération de leur surplus par le dispositif 1 selon l'invention.

De préférence, la première paroi latérale 5 et la seconde paroi latérale 6 comprennent à leur extrémité supérieure des moyens 12 formant support à des moyens de réception du ou des produits à napper. Ces moyens 12 comprennent, ou sont, de préférence un rebord, avantageusement un rebord double 13, formé par un double replis de l'extrémité supérieure de la première paroi 5 et/ou de la seconde paroi 6, formant un demi-canal ouvert faisant office de siège sur, et contre lequel, vient se positionner les moyens de réception du ou des produits à napper. Dans un mode de réalisation particulier, le rebord double 13 adopte une section transversale, dans le plan X-Y en forme de « L ».

La paroi de fond 4 et les parois latérales 5 et 6 sont sensiblement rigides, elles ne plient pas sous leur propre poids, elles sont pleines, de préférence lisses, et sont faites, ou comprennent, un matériau, ou assemblage de matériaux, présentant une résistance mécanique et chimique, compatible avec la nature et la consistance du ou des agents de nappage, comme par exemple du plastique, de la céramique, du métal ou alliage de métaux. Dans un mode de réalisation particulier, elles sont faites, ou comprennent, de l'inox.

La paroi de fond 4 et les parois latérales 5 et 6 peuvent comprendre plusieurs pièces distinctes, assemblées et fixées entre elles de façon adéquate, ou bien être formées à partir d'une seule pièce, par exemple une pièce plastique moulée ou injectée, ou bien une plaque métallique pliée.

De préférence, le dispositif 1 selon l'invention, avantageusement la paroi de fond 4, et encore plus avantageusement, également les parois latérales 5 et 6, comprennent, ou coopèrent avec, des moyens de thermostatage, qui permettent le maintien d'une température de consigne, sensiblement constante, du surplus d'agent de nappage qui est reçu dans le dispositif 1 selon l'invention. La paroi de fond 4, avantageusement également les parois latérales 5 et 6, sont alors thermostatées, à savoir chauffées ou refroidies, pour que le surplus d'agents de nappage, reçu par le dispositif 1 selon l'invention, soit maintenu, par exemple, une température identique ou similaire à celle à laquelle il se trouve avant le nappage ou lors du nappage. Par exemple, pour un agent de nappage liquide, ou semi-liquide, à chaud, cela permet au surplus de ne pas sécher, ou de se solidifier, lorsqu'il est reçu sur le dispositif 1 selon l'invention, pour qu'il puisse être récolté dans, ou par, le ou les moyen de collecte disposés sur les moyens de support 3 du dispositif 1 selon l'invention.

Les moyens de thermostatage comprennent, ou coopèrent avec, des moyens de régulation de la température, comme par exemple un thermostat, qui permet la sélection de la température de consigne, des moyens de chauffage et/ou des moyens de refroidissement, les moyens de chauffage pouvant être ou comprendre par exemple une résistance électrique, les moyens de refroidissement comprenant par exemple des moyens de distribution d'un liquide de refroidissement ou d'air froid. Les moyens de thermostatage peuvent comprendre, ou coopérer avec, des moyens de transfert de la chaleur et/ou du froid à la paroi de fond 4, avantageusement également aux parois latérales 5 et 6, qui comprennent, ou coopèrent avec, par exemple, un ou plusieurs bains remplis d'un fluide de transfert, comme par exemple de l'eau ou de l'huile. Les moyens de thermostatage peuvent comprendre, ou coopérer avec, des moyens de contrôle de la température de la paroi de fond 4, avantageusement également des parois latérales 5 et 6, ou du surplus de l'agent ou des agents de nappage dans le dispositif 1 selon l'invention, ou des moyens de transfert de la chaleur et/ou du froid, ces moyens de contrôle comprenant ou coopérant avec, par exemple, un pu plusieurs thermocouples.

Les moyens de support 3 sont amovibles, c'est-à-dire qu'ils peuvent s'attacher à, et se détacher de, la rampe 2. Ils peuvent être fixés à la rampe 2 et en être séparés. Ils comprennent des moyens de fixation 14 réversibles, qui coopèrent, de préférence engagent, des moyens de réception 15 pourvus au niveau de la rampe 2.

Dans un mode de réalisation particulier, les moyens de fixation 14 réversibles sont, ou comprennent, par exemple, au moins une encoche 16, de préférence deux encoches, engageant chacune une vis 17, ou tête de vis 17, fixée sur la rampe 2, de préférence sur la face externe de la première paroi latérale 5 et/ou de la seconde paroi latérale 6, avantageusement sur la face externe de la portion supérieure 5b de la première paroi latérale 5 et/ou de la portion supérieure 6b de la seconde paroi latérale 6, si les parois latérale 5 et/ou 6 comprennent plusieurs portions.

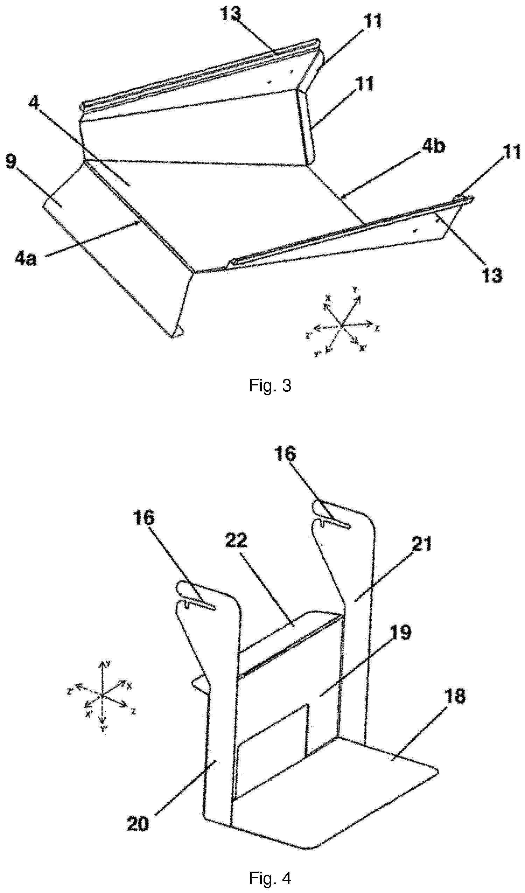

Les moyens de support 3 d'au moins un moyen de collecte du surplus du ou des agents de nappage sont aptes à recevoir, et en fonctionnement reçoivent, un ou plusieurs moyens de collecte du surplus du ou des agents de nappage. Ils forment une assise 18, de préférence un siège comprenant une assise 18 et un dossier 19, pour ce ou ces moyens de collecte (figure 4).

Les moyens de support 3 sont disposés par rapport à la rampe 2, et de préférence également dimensionnés, de manière à que le ou les moyens de collecte soient positionnés sous, et à l'aplomb de, la seconde extrémité 4b de la paroi de fond 4. De préférence, ils sont mobiles, avantageusement orientables, chaque positions pouvant être fixées par tous moyens adéquats. Cela présente l'avantage de conférer au moyen ou moyens de collecte la position la plus favorable, pour une collecte optimale du surplus de l'agent ou des agents de nappage, une position qui de préférence peut être bloquée par tous moyens adéquats. Cela présente également l'avantage de pouvoir s'adapter, et adapter la rampe 2, au support ou plan de travail, sur lequel est disposé le dispositif 1 selon l'invention. Dans ce mode de réalisation, ils sont, de préférence, mobiles en rotation par rapport aux moyens de fixation 14 réversibles de la rampe 2.

Les moyens de support 3 ont de préférence une section longitudinale, dans le plan Y-Z, qui est sensiblement en forme de « L », permettant au dispositif 1 selon l'invention d'être disposé contre le bord d'un support ou d'un plan de travail, ce qui présente l'avantage d'être d'un encombrement réduit.

Dans ce mode de réalisation particulier de l'invention, les moyens de support 3 comprennent, de préférence, deux bras 20 et 21, comprenant chacun une extrémité supérieure comprenant ou coopérant avec les moyens de fixation 14 réversibles à la rampe 2, et une extrémité inférieure débouchant sur, de préférence bordant, l'assise 18, le dossier 19 s'étendant entre les deux bras 20 et 21.

Les bras 20 et 21 sont destinés à s'étendre, et en fonctionnement s'étendent, verticalement, depuis la rampe 2, au-delà du bord du support ou plan de travail, sensiblement perpendiculairement au support ou plan de travail, alors que la rampe 2 s'étend sensiblement horizontalement sur, et jusqu'au bord du support ou plan de travail.

De préférence, les bras 20 et 21, avantageusement également l'assise 18 et/ou le dossier 19, sont ajustables, aptes à s'adapter, ou être adaptés, à la forme et aux dimensions du support, ou plan de travail, sur lequel est disposé le dispositif 1 selon l'invention. De manière encore plus avantageuse, les bras 20 et 21 et/ou l'assise 18 et/ou le dossier 19 sont télescopiques et/ou orientables.

De préférence, les moyens de support 3 comprennent en outre une plaque d'appui 22 apte à prendre appui, et qui en fonctionnement prend appui, sur le support ou plan de travail. Cela présente l'avantage de fournir un moyen de stabilisation aux moyens de support 3 et donc au dispositif 1 selon l'invention sur le support ou plan de travail.

De préférence, les moyens de support 3 comprennent, ou coopèrent avec, des moyens de thermostatage, qui permettent de chauffer et/ou refroidir le ou les moyens de collecte du surplus du ou des agents de nappage. Ces moyens peuvent être, ou coopérer, avec les moyens de thermostatage de la paroi de fond 4 et/ou des parois latérales 5 et 6.

Les moyens de support 3 peuvent comprendre plusieurs pièces distinctes, assemblées et fixées entre elles de façon adéquate, ou bien être formées à partir d'une seule pièce, par exemple une pièce plastique moulée ou injectée, ou bien une plaque métallique pliée.

Le dispositif 1 selon l'invention est apte à être utilisé, et, en fonctionnement, est utilisé comme moyen de récupération du surplus d'un ou plusieurs agents de nappage, lors du nappage d'un ou plusieurs produits alimentaires, à l'aide d'un ou plusieurs agents de nappage liquides ou semi-liquides.

Le dispositif 1 selon l'invention est utilisé seul, ou bien en combinaison, en complément à un ensemble de nappage. Il peut également être intégré à un ensemble de nappage.

L'ensemble de nappage selon l'invention comprend un ou plusieurs dispositifs 1 selon l'invention, tels que décrits précédemment, ainsi que des moyens de réception du ou des produits à napper, des moyens de distribution du ou des agents de nappage, et un ou plusieurs moyens de collecte du ou des agents de nappage.

Les moyens de réception du ou des produits à napper sont, comprennent, ou coopèrent avec, une ou plusieurs grilles, treillis ou plaques perforées, qui de préférence, sont thermostatables, et en fonctionnement sont thermostatées.

Les moyens de distribution du ou des agents de nappage sont tous moyens adéquats pour le ou les délivrer sur le ou les produits à napper, par exemple sous une forme d'une pluie, d'un rideau ou d'une nappe, d'agents de nappage, s'écoulant sur les produits à recouvrir. Ces moyens sont disposés de préférence au-dessus des moyens de réception du ou des produits à napper.

Les moyens de collecte du ou des agents de nappage sont, comprennent, ou coopèrent avec, un ou plusieurs contenants ou récipients, comme par exemple une ou plusieurs plaques, de préférence à rebord, ou un ou plusieurs bacs, et sont, de préférence, thermostatables, et en fonctionnement sont thermostatés.

L'ensemble de nappage selon l'invention est de préférence utilisé pour le nappage de produits alimentaires, en particulier des produits de pâtisserie, à l'aide d'un ou plusieurs agents de nappage étant solides, liquides ou semi-liquides.

## Revendications

1. Dispositif (1) de récupération d'un ou plusieurs agents de nappage, comprenant une rampe (2) inclinée, qui comprend une paroi de fond (4), comprenant une extrémité (4a) amont et une extrémité (4b) avale, une première paroi latérale (5) et une seconde paroi latérale (6) qui s'étendent de part et d'autre, sensiblement verticalement, et le long de ladite paroi de fond (4), **caractérisé en ce que** ledit dispositif (1) comprend des moyens de support (3) d'un ou plusieurs moyens de collecte du ou des agents de nappage, qui sont amovibles.

2. Le dispositif (1) selon la revendication 1, dans lequel les moyens de support (3) sont mobiles.

3. Le dispositif (1) selon la revendication 1 ou 2, dans lequel les moyens de support (3) sont disposés par rapport à la rampe (2) de manière à ce que le ou les moyens de collecte du ou des agents de nappage soient à l'aplomb de l'extrémité (4b) avale de la paroi de fond (4) de la rampe (2).

4. Le dispositif (1) selon l'une quelconque des revendications précédentes, dans lequel les moyens de support (3) ont une section longitudinale, dans le plan Y-Z, qui est sensiblement en forme de « L ».

5. Le dispositif (1) l'une quelconque des revendications précédentes, dans lequel les moyens de support (3) comprennent deux bras (20, 21) comprenant chacun une extrémité supérieure, comprenant ou coopérant avec des moyens de fixation (14) réversibles à la rampe (2), et une extrémité inférieure bordant une assise (18) pour recevoir le ou les moyens de collecte du ou des agents de nappage.

6. Le dispositif (1) selon l'une quelconque des revendications précédentes, dans lequel la paroi de fond (4), la première paroi latérale (5) et la seconde paroi latérale (6) sont thermostatées.

7. Le dispositif (1) selon l'une quelconque des revendications précédentes, comprenant des moyens de piètement (8), pourvus au niveau de l'extrémité (4a) amont de la paroi de fond (4).

8. Le dispositif (1) selon l'une quelconque des revendications précédentes, dans lequel la première paroi latérale (5) et la seconde paroi latérale (6) sont inclinées vers l'extérieur de la rampe (2).

9. Le dispositif selon la revendication 8, dans lequel la première paroi latérale (5) et la seconde paroi latérale (6) comprennent une portion inférieure (5a), respectivement une portion inférieure (6a), et au moins une portion supérieure (5b), respectivement au moins une portion supérieure (6b), lesdites portions inférieures (5a, 6a) ayant une inclinaison différente de celle desdites portions supérieures (5b, 6b).

10. Le dispositif (1) selon l'une quelconque des revendications précédentes, dans lequel la première paroi latérale (5) et la seconde paroi latérale (6) comprennent un rebord (11), formé par un replis de l'extrémité desdites parois (5, 6).

11. Le dispositif (1) selon l'une quelconque des revendications précédentes, dans lequel l'extrémité (4a) amont de la paroi de fond (4) présente une largeur, selon l'axe X-X', plus grande que celle, selon l'axe X-X', de l'extrémité (4b) avale.

12. Le dispositif (1) selon l'une quelconque des revendications précédentes, comprenant des moyens de piètement (8) pourvus au niveau de l'extrémité (4a) amont de la paroi de fond (4).

13. Utilisation du dispositif (1) selon l'une quelconque des revendication 1 à 11, pour la récupération d'un ou plusieurs agents de nappage.

14. Ensemble de nappage comprenant un ou plusieurs dispositifs (1) selon l'une quelconque des revendications 1 à 11, des moyens de réception du ou des produits à napper, des moyens de distribution du ou des agents de nappage, et un ou plusieurs moyens de collecte du ou des agents de nappage.

15. Utilisation de l'ensemble de nappage pour napper un ou plusieurs produits alimentaires à l'aide d'un ou plusieurs agents de nappage étant solides, liquides ou semi-liquides.
